(19) Europäisches Patentamt
European Patent Office
Office européen des brevets

(11) Publication number: **0 025 616**
**B1**

(12) # EUROPEAN PATENT SPECIFICATION

(45) Date of publication of patent specification: **30.11.83**

(51) Int. Cl.³: **A 01 N 37/28,**
A 01 N 37/26, A 01 N 37/20

(21) Application number: **80200769.0**

(22) Date of filing: **15.08.80**

(54) **A method for loosening fruit and/or leaves.**

(30) Priority: **28.08.79 GB 7929767**

(43) Date of publication of application:
**25.03.81 Bulletin 81/12**

(45) Publication of the grant of the patent:
**30.11.83 Bulletin 83/48**

(84) Designated Contracting States:
**FR GB IT**

(56) References cited:
**FR - A - 2 400 506**
**GB - A - 1 122 043**
**GB - A - 1 217 374**
**US - A - 3 734 711**

**CHEMICAL ABSTRACTS, vol. 71, no. 9, September 1, 1969, page 176, abstract no. 37778b COLUMBUS, Ohio (US) & Proc. Brit. Weed Contr. Conf., 9th 1968, 2, 659-67 J. YATES: "Selection of a candidate herbicide; a study of structure activity effects in a series of amino acid derivatives"**

**CHEMICAL ABSTRACTS, vol. 85, no. 11, September 13, 1976, page 110, abstract no. 72888y COLUMBUS, Ohio (US) & Plant Sci. Lett. 1976, 6(6), 369-77 H. THOMAS: "Delayed senescence in leaves treated with the protein synthesis inhibitor MDMP"**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Baxter, Robert**
**Tudor Cottage Cellar Hill Lynsted**
**Sittingbourne Kent (GB)**
Inventor: **Leach, Ronald Warneford Albert**
**2200 Lake Village Drive Apartment 423**
**Kingswood Texas 77339 (US)**

(74) Representative: **Hunter, Keith Roger Ian et al,**
**4 York Road**
**London SE1 7NA (GB)**

**EP 0 025 616 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A method for loosening fruit and/or leaves

The present invention relates to a method of loosening fruit and/or leaves on crop plants bearing fruit.

A very high proportion of the cost of fruit results from the cost of harvesting. Hand-picking of fruit is extremely expensive, with the result that mechanical devices for picking have been developed. Such devices generally work by shaking the tree to cause the fruit to fall. If the fruit is tightly bound to the tree, this operation is inefficient and may cause severe damage to the tree, often reducing the yield the following year.

There is thus a need for the use of chemical fruit loosening, or abscission, agents. Such agents are plant growth regulants which reduce the strength of attachment of the fruit to the tree, and thus aid mechanical harvesting.

A further need in agriculture is for leaf abscission agents, or defoliants. Such agents have a wide range of uses. For example, selective defoliants may be used in cotton crops to cause the leaves to fall, thus facilitating the mechanical picking of the cotton bolls by reducing the level of unwanted material.

It is known that many aniline derivatives have, to a larger or lesser extent, herbicidal properties (cf UK Patent Specifications 1,122,043 and 1,217,374).

It has now been found that certain aniline derivatives are unexpectedly very suitable for the loosening of fruit and/or leaves on crop plants bearing fruit.

The invention therefore provides a method of loosening fruit and/or leaves on a crop plant bearing fruit, which comprises treating the plant or part thereof with a compound of the general formula

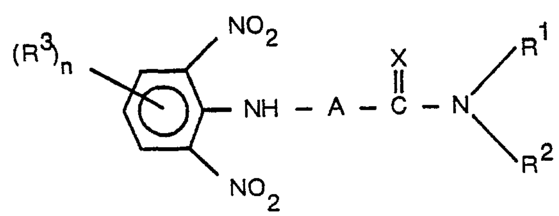 (I)

in which A represents an alkylene group having 2 carbon atoms; X represents an oxygen or a sulphur atom; $R^1$ represents a hydrogen atom, a hydroxy group, or an alkyl group having up to 4 carbon atoms; $R^2$ represents a hydrogen atom or an alkyl, alkoxy, hydroalkoxy or alkenyl group having up to 4 carbon atoms; $R^3$ represents a halogen atom, an acetamido group, an alkyl or haloalkyl group having up to 4 carbon atoms, or a group of formula $—NH.CH(CH_3).CO.NHCH_3$; and n represents 0, 1 or 2.

A represents a $—CH_2—CH_2—$ or, especially, $—CH(CH_3)—$, group.

Preferably X represents an oxygen atom.

Preferably $R^1$ represents a hydrogen atom, a hydroxy group or a methyl group.

$R^2$ may for example represent a hydrogen atom, or a methyl, ethyl, propyl, allyl, hydroxymethyl or methoxy group. Preferably $R^2$ represents a methyl group.

$R^3$ may for example represent a fluorine, chlorine or bromine atom, or a methyl, ethyl or trifluoromethyl group. Preferably $R^3$ represents a methyl group.

Preferably n represents 0 or 1. If n represents 1, the group $R^3$ is preferably in the 4-position of the aniline ring.

Suitable compounds of the general formula I include those in which $R^1$ represents a hydrogen atom or a hydroxy group, $R^2$ represents a methyl group, X represents an oxygen atom and either n is 0 or n is 1 and $R^3$ represents a 3-acetamido, a 4-fluoro or a 4-methyl group.

Especially preferred compounds of the general formula I are those in which A represents $—CH(CH_3)—$, X represents an oxygen atom, $R^1$ represents a hydrogen atom or a hydroxy group, $R^2$ represents a methyl group, n is 1 and $R^3$ represents a methyl group in the 4-position of the aniline ring.

The compounds of the general formula I in which A is $—CH(CH_3)—$ exist in optical isomeric form. The process according to the present invention may be carried out using either the D or the L isomer or a mixture thereof. In general, the D isomer or mixtures containing the D isomer are preferred for use in the process according to the invention.

The compounds of the general formula I can be prepared by reacting a compound of the general formula

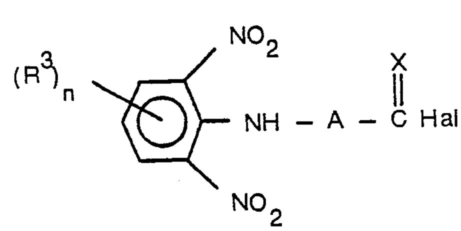 (II)

in which Hal represents a halogen, preferably a chlorine atom, with a compound of the general formula

$$NHR^1R^2 \qquad (III)$$

If the reaction is carried out using a single optical isomer, preferably the D-isomer, of a compound of the general formula II in which A is $-CH(CH_3)-$, the corresponding single optical isomer of the compound of the general formula I is obtained.

The compound of the general formula II may be obtained by reaction of the corresponding free carboxylic or thiocarboxylic acid with a halogenating agent, for example thionyl chloride.

The free carboxylic or thiocarboxylic acid may be obtained by reacting a compound of the general formula

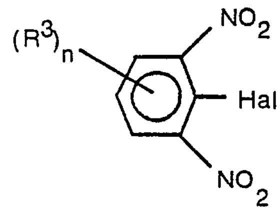

(IV)

in which Hal represents a halogen, preferably a chlorine, atom, with a compound of the general formula

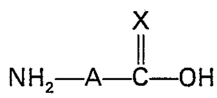

(V)

This reaction is suitably carried out in the presence of an acid binding agent, for example an alkali metal carbonate, bicarbonate or hydroxide, or an amine, preferably a tertiary amine, for example pyridine. If a single optical isomer, preferably the L-isomer, of a compound of the general formula V is used, the reaction proceeds with inversion of configuration to produce the opposite isomer, preferably the D-isomer, of the resulting acid.

The degree of loosening obtained will depend on various factors, including the dosage of active compound applied. Often, a higher dosage will be required to loosen leaves than will be required to loosen fruit. Thus, by a suitable choice of dosage, fruit loosening can be promoted without causing leaf-drop from a plant bearing both fruit and leaves.

The method according to the invention may for example be used for loosening the fruit in crops of citrus fruits, apples, olives, grapes, nuts and coffee. It is especially useful for the treatment of oranges and olives. Suitably the active compound is applied to the plant during the period of time of 3 days to 3 weeks before harvest of the fruit is desired. Depending on the dosage applied, the crop treated, and the period of time before harvesting, varying proportions of fruit may actually fall spontaneously from the plant. In some crops it may be desirable to reduce the strength of attachment of the fruit to the plant without actually causing fruit drop. In other crops, notably olives, it may be desirable to cause the fruit to fall from the plant spontaneously under its own weight, for ease of harvesting.

The defoliation of cotton is a further useful application of the process according to the invention. The harvesting of cotton bolls by mechanical pickers is much facilitated if the leaves of the cotton bushes are first removed by application of a compound of the general formula I.

The optimum dosage of the compound of the general formula I applied to the plant will depend not only on whether fruit loosening, leaf loosening or both, is required, but also on such factors as the time of year, the temperature and the humidity, and, of course, on the particular plant being treated. Generally, however, the compound of the general formula I is most suitably applied in the form of a solution containing from 5 to 2000 ppm, preferably 50 to 500 ppm, of the compound. Generally, leaf abscission will occur most readily when concentrations at the upper end of the preferred range are applied.

The volume of solution applied will depend very much on the lay-out of the area being treated, but will generally be selected such that each plant is treated with from 5 mg to 40 g of the compound of the general formula I. For fruit loosening, for example in orchards or vineyards, each plant is preferably treated with from 5 mg to 20 g of compound, the higher dosages above 20 g per plant being preferred when defoliation is required.

The dosage applied should not, of course, be so large that the plant is significantly damaged by the herbicide effect of the compound of the general formula I.

The compound of the general formula I may if desired be applied to the plant along with other loosening agents.

Suitably, the compound of the general formula I is formulated as a composition which, in addition to the compound of the general formula I and optionally other active ingredients, contain a carrier or a surface-active agent or both a carrier and a surface-active agent. Suitable formulations are described for example in UK Patent Specification No. 1,164,160.

The following Examples illustrate the invention.

Example 1

Field Tests for Abscission Activity

Tests were carried out to determine the activity of compounds according to the invention as fruit abscission agents. Each compound was formulated as a solution in acetone-water (1:1) with 0.05% of Nonidet P40 (Trade Mark) added as wetting agent.

Branches of trees carrying a convenient number of ripe fruits were sprayed with 500 mls of solutions containing various concentrations of the test compounds. For each type of fruit, a commercial compound known as an abscission agent for that fruit, was also tested. Control branches were sprayed with 500 ml of a blank solution (i.e. acetone, water and wetting agent only). At the end of the test period, the average force required to pull a fruit from the branch was measured.

Tests were carried out on oranges (variety "Valencia Late") with a test period of 5 days, olives (variety "Martena") with a test period of 6 days, apples (variety "Bramley") with a test period of 11 days, and almonds, with a test period of 7 days. The compounds tested were as follows, and the test results are given in Table 1.

Compounds Tested

Compound No. 1:

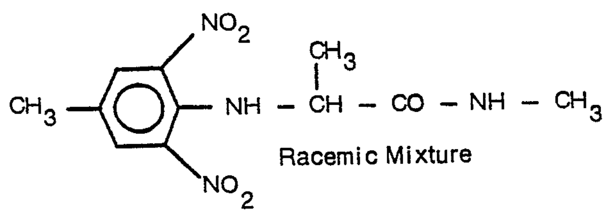

Racemic Mixture

Compound No. 2: D-isomer of compound No. 1.

Compound No. 3:

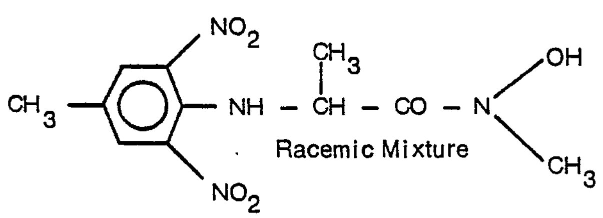

Racemic Mixture

Compound No. 4: D-isomer of compound No. 3

"RELEASE" — Trade Mark — (Abbott)

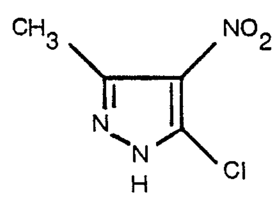

"ALSOL—200" — Trade Mark $Cl—CH_2—CH_2—Si(—O—CH_2—CH_2—O—CH_3)_3$ (Ciba-Geigy)

"ETHREL" — Trade Mark — $Cl—CH_2—CH_2—CH_2—PO_3H_2$

TABLE 1

Test Results

| Compound No. | Dosage (ppm) | Mean force required to remove fruit (% of control) | | | | | | | | |
|---|---|---|---|---|---|---|---|---|---|---|
| | | Oranges | | | Olives | | Apples | | Almonds | |
| | | 50 | 250 | 1000 | 250 | 750 | 250 | 1000 | 250 | 1000 |
| 1 | | 52.6 | 3.5 | 5.0 | 21.3 | 30.1 | 22.7 | 23.9 | 72.9 | 39.0 |
| 2 | | 6.8 | 5.0 | 0.6 | 31.3 | 37.7 | 35.5 | 18.4 | 37.6 | 66.1 |
| 3 | | 59.3 | 36.7 | 20.9 | 28.0 | 36.0 | 73.1 | 44.0 | 85.4 | 88.1 |
| 4 | | 21.5 | 18.4 | – | 41.3 | 32.9 | 36.8 | 25.9 | 45.8 | 55.6 |
| "RELEASE" | | 88.6 | 99.9 | 73.0 | | | | | 84.7 | – |
| "ALSOL–200" | | | | | 86.6 | 47.0 | | | | |
| "ETHREL" | | | | | | | 101.7 | 76.7 | | |

It can be seen from Table 1 that, for olives, oranges, apples and almonds, application of a compound according to the invention resulted in a considerable reduction of the force required to remove the fruit from the tree. Furthermore, in every test except for a single test on almonds, the compound according to the invention gave a greater reduction in the force required to remove the fruit, compared with a commercially available fruit abscission agent.

Similar tests were performed on the abscission of coffee beans, with similar results.

Example 2

In a laboratory test carried out to investigate the abscission activity of various compounds, the following procedure was used.

French bean (cv. Canadian Wonder) were used as the indicator species for abscission activity. French bean seeds were sown at the rate of 2 per 8 cm pot in sterilised loam. Plants were maintained at 20°C under 14 hr daylength and watered by sub-irrigation. At the first trifoliate leaf stage of development, the laminae of the primary leaves were removed. 48 hrs. after removal of the laminae, liquid formulations of the test compounds were applied. The formulation used, consisted of 90% water and 10% acetone which contained 0.4% TRITON X155 and amounts of the test compound to give spray application at various dosages up to 2000 ppm.

Treatments were as foliar application to "run off" using a fixed nozzle. After treatment the plants were set out in randomised block design.

The following compounds gave greater than 75% activity compared with untreated controls:

Compounds 1, 2, 3 and 4 named in Example 1.

Compound of formula I in which A is $—CH_2—CH_2—$; $R^1$ is hydrogen; $R^2$ is methyl; X is oxygen; n is 0.

Compounds of formula I in which A is $—CH(CH_3)—$; $R^1$ is hydrogen; $R^2$ is methyl; X is oxygen and $(R^3)n$ is either 3-acetylamino or 4-fluoro.

Example 3

Preparation of N-methyl-2-(4-methyl-2,6-dinitroanilino)propionamide (Compound 1) and its D-isomer (Compound 2)

A mixture of 4-chloro-3,5-dinitrotoluene (810 g), DL-alpha-alanine (384 g), and sodium bicarbonate (840 g) was stirred and refluxed in 95% ethanol (800 ml) for 18 hours. The mixture was diluted with water (4000 ml), filtered, and the ethanol was distilled off under reduced pressure. More water (4000 ml) was added during the distillation in order to maintain the solids in solution. The aqueous solution was cooled by the addition of ice (2000 g) and acidified with concentrated hydrochloric acid (Congo Red) whilst stirring. The initially formed sticky precipitate crystallised on continued stirring to a dark-yellow solid which was filtered off, washed with water, and air-dried. Yield of 2-(4-methyl-2,6-dinitroanilino)propionic acid 95%, m.p. 158—161°C.

A solution of this acid (490 g) in benzene (2500 ml) was stirred and thionyl chloride (570 g) was added at a rate such that a smooth evolution of gases occurred. When the addition was complete

stirring was continued, and the mixture was refluxed for 12 hours. The reaction mixture was then filtered, and the benzene and excess thionyl chloride distilled off under reduced pressure. The acid chloride remained as a dark red oil.

This oil was dissolved in methylene chloride (2500 ml) and the solution cooled to 0°C. Methylamine (160 g) was dissolved in methylene chloride (1000 ml) and the solution was added to the solution of the acid chloride with stirring at 0—5°C. The precipitate was filtered off, and washed with methylene chloride (500 ml). The filtrate was evaporated to dryness, and the residue was stirred with industrial methylated spirit (1000 ml). The product was filtered off, washed with industrial methylated spirit (three times with 200 ml) and air-dried. The N-methyl-2-(4-methyl-2,6-dinitroanilino)propionamide was obtained as a yellow powder, melting point 149—151°C. Total Yield 61%.

*Analysis*

| | C | H |
|---|---|---|
| Calculated for $C_{11}H_{14}N_4O_5$ | 46.8 | 4.9 |
| Found | 47.0 | 4.9 |

The D-isomer of this compound (compound 2, melting point 135—136°C) was produced by a method analogous to that used for the preparation of the D,L racemic mixture, except that L-alpha-alanine was used as starting material.

Example 4

Preparation of N-methyl-2-(4-methyl-2,6-dinitroanilino)propionohydroxamic acid (Compound 3) and its D-isomer (Compound 4)

2-(4-methyl-2,6-dinitroanilino)propionyl chloride, prepared as in Example 3 (2.0 g) in methylene chloride (50 ml) was added dropwise to a stirred solution of N-methyl-hydroxylamine hydrochloride (2.0 g) and sodium acetate (6.0 g) in water (50 ml) at 0—5°C. The mixture was stirred for 2 hours, after which the organic layer was separated, dried and evaporated to dryness. The yellow residue was recrystallised from benzene to give Compound 3, melting point 171—172°C.

*Analysis*

| | C | H | N |
|---|---|---|---|
| Calculated for $C_{11}H_{14}N_4O_6$ | 44.3 | 4.7 | 18.8 |
| Found | 44.6 | 4.6 | 18.9 |

The D-isomer of Compound 3 (Compound 4, melting point 125—126°C) was prepared by a method analogous to that used for the preparation of the D,L racemic mixture, except that L-alpha-alanine was used as starting material.

**Claims**

1. A method of loosening fruit and/or leaves on a crop plant bearing fruit, which comprises treating the plant or part thereof with a compound of the general formula

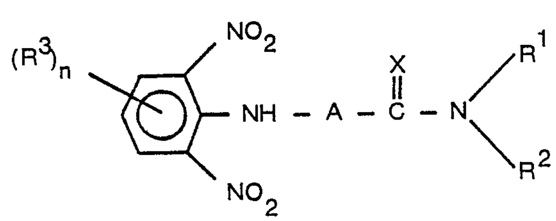

(I)

in which A represents an alkylene group having 2 carbon atoms; X represents an oxygen or a sulphur atom; $R^1$ represents a hydrogen atom, a hydroxy group, or an alkyl group having up to 4 carbon atoms; $R^2$ represents a hydrogen atom or an alkyl, alkoxy, hydroxyalkyl or alkenyl group having up to 4 carbon atoms; $R^3$ represents a halogen atom, an acetamido group, an alkyl or haloalkyl group having up to 4 carbon atoms, or a group of formula —NH.CH($CH_3$).CO.NH$CH_3$; and n represents 0, 1 or 2.

2. A method as claimed in Claim 1, in which X represents an oxygen atom.

3. A method as claimed in either Claim 1 or Claim 2, in which $R^1$ represents a hydrogen atom, a hydroxy group or a methyl group, and $R^2$ represents a methyl, ethyl, propyl, allyl, hydroxymethyl or methoxy group.

4. A method as claimed in any one of Claims 1 to 3, in which $R^3$ represents a fluorine, chlorine or bromine atom or a methyl, ethyl or trifluoromethyl group.

5. A method as claimed in any one of Claims 1 to 4, in which n is 0 or 1.

6. A method as claimed in Claim 5 in which n is 1 and $R^3$ is a substituent in the 4-position of the aniline ring.

7. A method as claimed in any of Claims 1 to 6, in which A represents a —$CH(CH_3)$— group.

8. A method as claimed in Claim 1, in which the compound of the general formula I is one in which A is —$CH(CH_3)$—, $R^1$ is hydrogen, $R^2$ is methyl, X is oxygen, and $(R^3)_n$ is 4-methyl, 3-acetylamino, or 4-fluoro; A is —$CH(CH_3)$—, $R^1$ is hydroxy, $R^2$ is methyl, X is oxygen and $(R^3)_n$ is 4-methyl; or A is —$CH_2$—$CH_2$—, $R^1$ is hydrogen, $R^2$ is methyl, X is oxygen and n is 0.

9. A method as claimed in any one of claims 1 to 8, in which citrus fruits, apples, olives, grapes, nuts, coffee beans, or the leaves of cotton plants, are loosened.

10. A method as claimed in any one of Claims 1 to 9, in which from 5 mg. to 40 g. of the compound of the general formula I are applied to the plant.

**Patentansprüche**

1. Verfahren zum Lockern von Früchten und/oder Blättern an früchtetragenden Nutzpflanzen, umfassend die Behandlung der Pflanze oder eines Teiles davon mit einer Verbindung der allgemeinen Formel

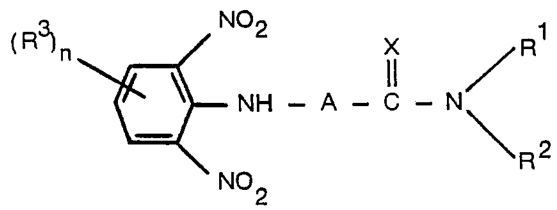

(I)

in der A eine Alkylgruppe mit 2 Kohlenstoffatomen, X ein Sauerstoff- oder Schwefelatom, $R^1$ ein Wasserstoffatom, eine Hydroxygruppe oder eine Alkylgruppe mit bis zu 4 Kohlenstoffatomen, $R^2$ ein Wasserstoffatom oder eine Alkyl-, Alkoxy-, Hydroxyalkyl- oder Alkenylgruppe mit bis zu 4 Kohlenstoffatomen, $R^3$ ein Halogenatom, eine Acetamidogruppe, eine Alkyl- oder Halogenalkylgruppe mit bis zu 4 Kohlenstoffatomen oder eine Gruppe der Formel —$NH.CH(CH_3).CO.NHCH_3$ bedeutet und n 0, 1 oder 2 ist.

2. Verfahren nach Anspruch 1, wobei X ein Sauerstoffatom bedeutet.

3. Verfahren nach einem der Ansprüche 1 oder 2, wobei $R^1$ ein Wasserstoffatom, eine Hydroxygruppe oder eine Methylgruppe und $R^2$ eine Methyl-, Ethyl-, Propyl-, Allyl-, Hydroxymethyl- oder Methoxygruppe bedeutet.

4. Verfahren nach einem der Ansprüche 1 bis 3, wobei $R^3$ ein Fluor-, Chlor- oder Bromatom oder eine Methyl-, Ethyl- oder Trifluormethylgruppe bedeutet.

5. Verfahren nach einem der Ansprüche 1 bis 4, wobei n 0 oder 1 ist.

6. Verfahren nach Anspruch 5, wobei n 1 ist und $R^3$ ein Substituent in 4-Stellung des Anilinringes.

7. Verfahren nach einem der Ansprüche 1 bis 6, wobei A eine —$CH(CH_3)$—Gruppe bedeutet.

8. Verfahren nach Anspruch 1, wobei die Verbindung der allgemeinen Formel I eine solche ist, in der A —$CH(CH_3)$—, $R^1$ Wasserstoff, $R^2$ Methyl, X Sauerstoff und $(R^3)_n$ 4-Methyl, 3-Acetylamino oder 4-Fluor ist; A —$CH(CH_3)$—, $R^1$ Hydroxy, $R^2$ Methyl, X Sauerstoff und $(R^3)_n$ 4-Methyl ist oder A —$CH_2$—$CH_2$—, $R^1$ Wasserstoff, $R^2$ Methyl, X Sauerstoff und n 0 ist.

9. Verfahren nach einem der Ansprüche 1 bis 8, wobei Cirtusfrüchte, Äpfel, Oliven, Trauben, Nüsse, Kaffeebohnen oder die Blätter von Baumwollpflanzen gelockert werden.

10. Verfahren nach einem der Ansprüche 1 bis 9, wobei 5 mg bis 40 g der Verbindung der allgemeinen Formel I auf die Pflanze aufgebracht werden.

**Revendications**

1. Une méthode pour détacher les fruits et/ou les feuilles d'une plante de culture portant des fruits, qui comprend le traitement de la plante, ou de partie de celle-ci avec un composé de formulé générale

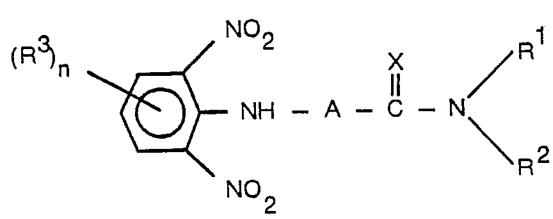

(I)

dans laquelle A représente un groupe alkylène possédant deux atomes de carbone; X représente un atome d'oxygène ou de soufre, $R^1$ représente un atome d'hydrogène, un groupe hydroxy, ou un groupe alkyle possédant jusqu'à 4 atomes de carbone; $R^2$ représente un atome d'hydrogène ou un groupe alkyle, alcoxy, hydroxyalkyle ou alcényle possédant jusqu'à 4 atomes de carbone; $R^3$ représente un atome d'halogène, un groupe acétamido, un groupe alkyle ou haloalkyle possédant jusqu'à 4 atomes de carbone, ou un groupe de formule $—NH.CH(CH_3).CO.NHCH_3$; et n vaut 0, 1 ou 2.

2. Une méthode selon la revendication 1, dans laquelle X représente un atome d'oxygène.

3. Une méthode selon les revendications 1 ou 2, dans laquelle $R^1$ représente un atome d'hydrogène, un groupe hydroxy ou un group méthyle, et $R^2$ représente un group méthyle, éthyle, propyle, allyle, hydroxyméthyle ou méthoxy.

4. Une méthode selon l'une des revendications 1 à 3, dans laquelle $R^3$ représente un atome de fluor, de chlore ou de brome ou un groupe méthyle, éthyle ou trifluorométhyle.

5. Une méthode selon l'une des revendications 1 à 4, dans laquelle n vaut 0 ou 1.

6. Une méthode selon la revendication 5 dans laquelle n vaut 1 et $R^3$ est un substituant en position 4 du cycle aniline.

7. Une méthode selon l'une des revendications 1 à 6, dans laquelle A représente un groupe $—CH(CH_3)—$.

8. Une méthode selon la revendication 1, dans laquelle le composé de formule générale I est un composé où A est $—CH(CH_3)—$, $R^1$ est un hydrogène, $R^2$ est un méthyle, X est un oxygène, et $(R^3)_n$ est un 4-méthyle, 3-acétylamino ou 4-fluoro; A est $—CH(CH_3)—$; $R^1$ est un hydroxy, $R^2$ est un méthyle, X est un oxygène est $(R^3)_n$ est un 4-méthyle; ou A est $—CH_2—CH_2—$, $R^1$ est un hydrogène, $R^2$ est un méthyle, X est un oxygène et n vaut 0.

9. Une méthode selon l'une des revendications 1 à 8, dans laquelle des agrumes, des pommes, des olives, des raisins, des noix, des grains de café ou les feuilles de cotonniers, sont détachés.

10. Une méthode selon l'une des revendications 1 à 9, dans laquelle de 5 mg à 40 g du composé de formule générale I sont appliqués à la plante.